# EUROPEAN PATENT SPECIFICATION

(11) **EP 1 986 110 B1**
(45) Date of publication and mention of the grant of the patent: **11.07.2012**
(21) Application number: 08005137.8
(22) Date of filing: 19.03.2008
(51) Int. Cl.: G06F 21/00

(54) **System and method of managing file and mobile terminal device**
System und Verfahren zur Dateiverwaltung und mobiles Endgerät
Système et procédé de gestion de fichier et dispositif de terminal mobile

(30) Priority: 27.04.2007 JP 2007118378
(43) Date of publication of application: 29.10.2008
(73) Proprietor: Hitachi Solutions, Ltd., Tokyo 140-0002 (JP)
(72) Inventor: Ohama, Nobuyuki, Shinagawa-ku Tokyo 140-0002 (JP); Kirihata, Yasuhiro, Shinagawa-ku Tokyo 140-0002 (JP)
(74) Representative: Liesegang, Eva

(56) References cited:
- EP-A- 1 701 483
- US-A1- 2004 193 673
- US-A1- 2005 210 458

## Description

### BACKGROUND OF THE INVENTION

### Field of the Invention

The present invention relates to a system and a method of managing a file and a mobile terminal device, and to a method of holding confidential data in the mobile terminal device, for example.

### Background Art

As a mobile phone is more sophisticated, the mobile phone can hold various data. However, to hold data with high confidentiality (confidential data) in the mobile phone, the confidential data might leak into the outside due to the loss or theft of the mobile phone.

A method to solve the above problem includes a terminal locking technique in "Functions and Interface of Mobile Phone Terminal for User" (Riyousya kara Mita Keitai Denwa Tanmatsu no Kinou oyobi Interface, in Japanese) (see 1-4-4, particularly), Technical Trend Team (Gijutsu-doukou Han, in Japanese), Policy Planning and Research Division, General Affairs Department, Japan Patent Office (http:/www.jpo.go.jp/shiryou/s_sonota/hyoujun_gijutsu/keitai/mokuji.htm) as the standard technology for a mobile phone. This technique provides a function of requesting a pre-registered password or requesting biometric authentication in case of no manipulation for a certain time period and cancelling manipulation unless the authentication is passed. This can prohibit no authorized user of the mobile phone from accessing data in the mobile phone.

Another secure data holding technique is encryption. For example, JP Patent Publication (Kokai) No. 11-149414A (1999) discloses a procedure to interrupt file I/O processing of an OS and automatically performing encryption/decryption processing. This can prevent decipher of data if the data is taken out to other terminals that do not retain a decryption key.

Such a terminal locking technique as disclosed in the above document by JPO can prevent take-out of data by an unauthorized user, but cannot prevent flow-out of data due to wrong operation of the mobile phone by an authorized user of the mobile phone or the leakage of data by a malicious user.

In JP Patent Publication (Kokai) No. 11-149414A (1999), the encrypted data might be taken out by an unauthorized user who has obtained the mobile phone if the mobile phone is lost. In that case, the data is not deciphered unless a decryption key is leaked, but a company must declare the data loss, hence might lose confidence in society.

In view of the above circumstances, the present invention provides a method and a system for securely holding data that can prevent flow-out of the data due to wrong operation by an authorized user of a mobile terminal, and leakage of the data by a malicious authorized user and unauthorized user.

EP 1 701 483 Al discloses a method for automatically sharing data between bluetooth devices which are in close proximity with each other. Devices become known and "trusted" by implementing the bluetooth paring procedure, in which bluetooth linkkeys are exchanged using the device pairing procedure, and by explicitly marking the device as trusted. Once such relationship is established, the devices remember that the other bluetooth device is trusted, since the device, as part of the paring procedure, shares its unique device hardware ID with the other device. When paired devices are found, one bluetooth device automatically allows the other device to present a virtual representation of data that is shared. Shared data can be selectively downloaded for use by the other device as long as the devices are in proximity. When the link between the bluetooth devices is detected as broken, the device that had a virtual appearance for the shared data deletes the shared folder from its operating system.

US 2005/0210458 A1 discloses an update method of a software which is stored in a rewritable non-volatile memory of a communication terminal. The method comprises an update file transfer step in which an update software is transferred to the communication terminal from a software management server for managing the update software which is to be stored in the rewritable non-volatile memory as an update file, and the update file is stored in a rewritable volatile memory of the communication terminal. In an update software rewriting step, software which is stored in the rewritable non-volatile memory is rewritten with the update software stored in the rewritable volatile memory as the update file after completion of an update file transfer step.

### SUMMARY OF THE INVENTION

The object of the invention is solved by the features of the appended claims.

To solve the above problem, according to the present invention, a pre-determined capacity of volatile memory region (a region that is deleted at the OS termination) is reserved in a memory (execution memory) in a mobile terminal, and linked to a virtual folder created in a folder creating region. Then, when the virtual folder is accessed, the access is redirected to the volatile memory region.

Additionally, according to the present invention, a general application such as a mailer, viewer or editor is prohibited from accessing the volatile memory region, while only an application called file management means (a file management service) allowed to access a confidential file is permitted to access the volatile memory region.

That is, a file management system according to the present invention comprises a user terminal device and a mobile terminal device, and is to transfer a confidential file between the devices. The user terminal device comprises file transfer controlling means for requesting access to the mobile terminal device and executing transfer of the confidential file. The mobile terminal device comprises: file management means for, at the startup of an OS, reserving part of an execution memory in the device as a volatile memory region being a memory region that is deleted at the termination of the OS, and coupling a virtual folder to save the confidential file transferred from the user terminal device to the volatile memory region; region; and redirection means for redirecting access to the virtual folder to the volatile memory region during the OS startup in the mobile terminal device. The mobile terminal device further comprises memory access controlling means for permitting access to the confidential file in response to a request to access the volatile memory region only if an accessing side is the file management means. The file management means also deletes the volatile memory region from the execution memory at the OS termination in the mobile terminal device and deletes the virtual folder.

Moreover, in the file management system according to the present invention, the mobile terminal device comprises: file management means for, at the startup of an OS in the mobile terminal device, reserving part of a memory in the device as a volatile memory region being a memory region that is deleted at the termination of the OS, and saving the confidential file transferred from the user terminal device in the volatile memory region; and memory access controlling means for permitting access to the confidential file in response to a request to access the volatile memory region during the OS startup in the mobile terminal device only if the accessing side is the file management means.

Further, in the file management system according to the present invention, the mobile terminal device comprises: file management means for, at the startup of an OS in the mobile terminal device, reserving part of the non-volatile memory as a non-volatile file region being a memory region that survives after the termination of the OS, and coupling a folder to save the confidential file transferred from the user terminal device to the non-volatile file region; and redirection means for redirecting access to the folder to the non-volatile file region during the OS startup in the mobile terminal device. Further, the file management means can exclusively open the confidential file stored in the non-volatile file region. Additionally, the file management means deletes only the confidential file stored in the non-volatile file region at the OS termination.

The present invention also provides a file management method for the above mentioned file management system, and a mobile terminal device constituting the above mentioned file management system.

Further characteristics of the present invention will be apparent from the preferred embodiments and the attached drawings to carry out the present invention described below.

The present invention can prevent flow-out of data due to wrong operation by an authorized user of a mobile terminal device, and leakage of data by a malicious authorized user and unauthorized user, securely holding confidential data in the mobile terminal.

### BRIEF DESCRIPTION OF THE DRAWINGS

Fig. 1 is a diagram showing the overall configuration of a file holding system according to a first embodiment of the present invention.
Fig. 2 is a diagram showing the functional configuration of a file management service 112A.
Fig. 3 shows flowcharts illustrating startup processing and termination processing of a mobile phone.
Fig. 4 is a diagram showing an example of memory region setting data 112B.
Fig. 5 shows diagrams of screen examples of folder lists before and after the startup processing of a mobile phone 100.
Fig. 6 is a flowchart illustrating access to a file in a virtual folder.
Fig. 7 is a flowchart illustrating processing to access a file management service.
Fig. 8 is a diagram showing the overall configuration of a file management system according to a second embodiment of the present invention.
Fig. 9 shows flowcharts illustrating startup processing and termination processing of a mobile phone.
Fig. 10 is a diagram showing an example of memory region setting data 811C.

### DETAILED DESCRIPTION OF THE PREFERRED EMBODIMENTS

The present invention provides a method of transferring confidential data (a file) from a computer (PC) to a personal digital assistant such as a mobile phone, and reserving confidentiality of the data so that general applications such as a viewer or text editor in the mobile phone cannot access the confidential data. The following will describe embodiments of the present invention with reference to the attached drawings. However, note that the embodiments are just examples to implement the present invention and do not limit the present invention.

### <First Embodiment>

### (1) System Configuration

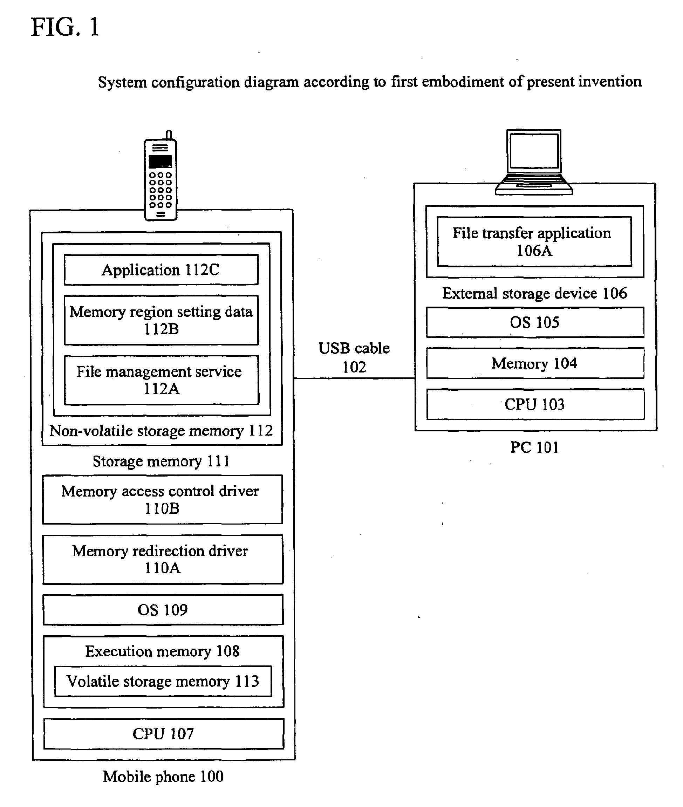

Fig. 1 is a diagram showing the overall configuration of a data holding system according to a first embodiment of the present invention. The data holding system comprises a mobile phone (personal digital assistant) 100 and a PC 101. The mobile phone 100 and the PC 101 can conduct serial communication through connection between them via a USB cable 102.

The PC 101 comprises a CPU 103 that functions as a control unit for controlling processing in the entire device, a memory 104, an OS 105 and an external storage device 106 that includes a file transfer application 106A that operates in transmission/reception of confidential data (a file) to/from the mobile phone 100.

The mobile phone 100 comprises a CPU 107 for controlling processing in the entire mobile phone, an execution memory 108, an OS 109, a memory redirection driver 110A, a memory access control driver 110B and a storage memory 111 including a non-volatile storage memory 112 that saves a file management service 112A, memory region setting data 112B and an application 112C. The memory access control driver 110B monitors I/O to/from a volatile memory 113 and prohibits processes other than the file management service 112A from accessing to confidential data. That is, only the file management service 112A can handle the confidential data. The memory redirection driver 110A apparently holds the confidential data in a virtual folder discussed later, but it actually operates to hold the data in another record region being a linked side (the volatile storage memory 113). The volatile storage memory 113 is a partial region of the execution memory 108 reserved at the startup of the OS 109 and created as a memory with volatility.

### (2) Functional Configuration of File Management Service

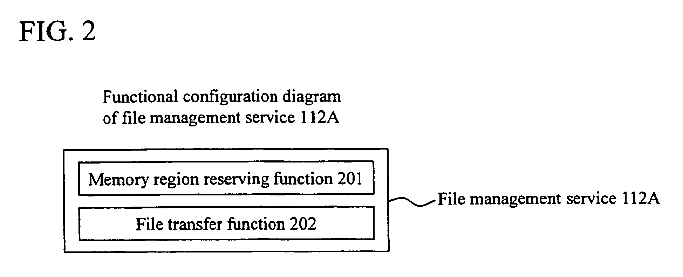

Fig. 2 is a diagram showing the functional configuration of the file management service 112A. Functions of the file management service 112A includes a memory region reserving function 201 of reserving a region to hold data in the non-volatile storage memory 112 and a file transfer function 202. In Fig. 2, the memory region reserving function 201 has a function of reserving a region of the volatile storage memory 113 in the execution memory 108. Meanwhile, the file transfer function 202 has a function of implementing data transfer between the PC 101 and the mobile phone 100 by cooperating with the file transfer application 106A in the PC 101.

### (3) Startup Processing and Termination Processing of Mobile Phone

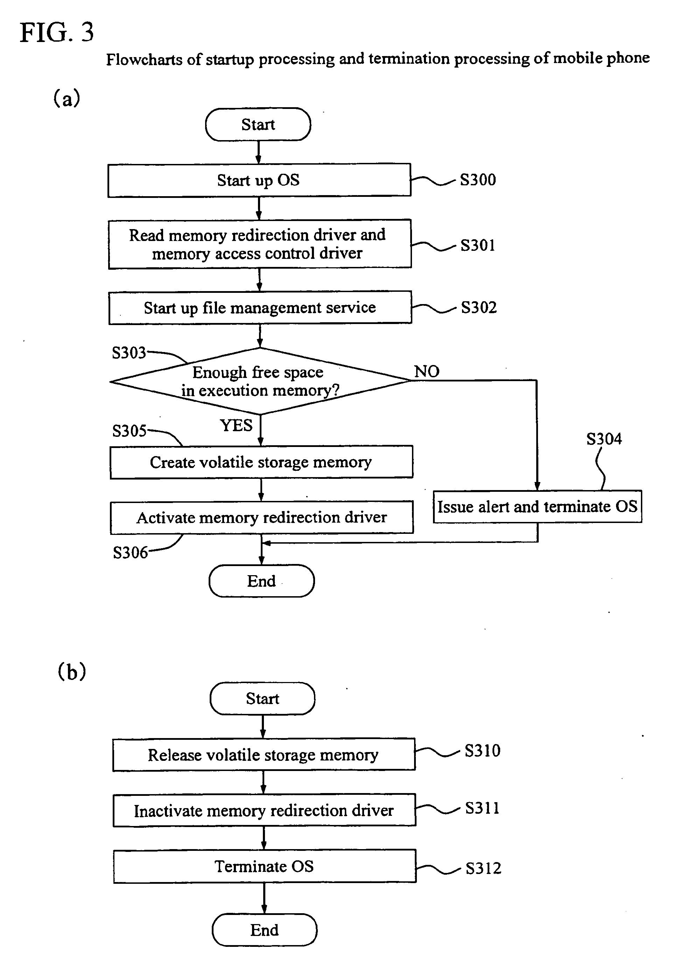

Fig. 3 (a) is a flowchart illustrating the processing executed at the startup of the mobile phone 100; and Fig. 3 (b) is a flowchart illustrating the processing executed at the termination of the mobile phone 100. In either processing, the CPU 107 mainly operates the processing, unless otherwise noted.

In Fig. 3 (a), first, the OS 109 of the mobile phone 100 starts up (step S300). Then, the OS 109 reads the memory redirection driver 110A and the memory access control driver 110B and deploys the drivers on the execution memory 108 (step S301). At this time, the memory redirection driver 110A and the memory access control driver 110B are read in the state of not being activated (inactivated).

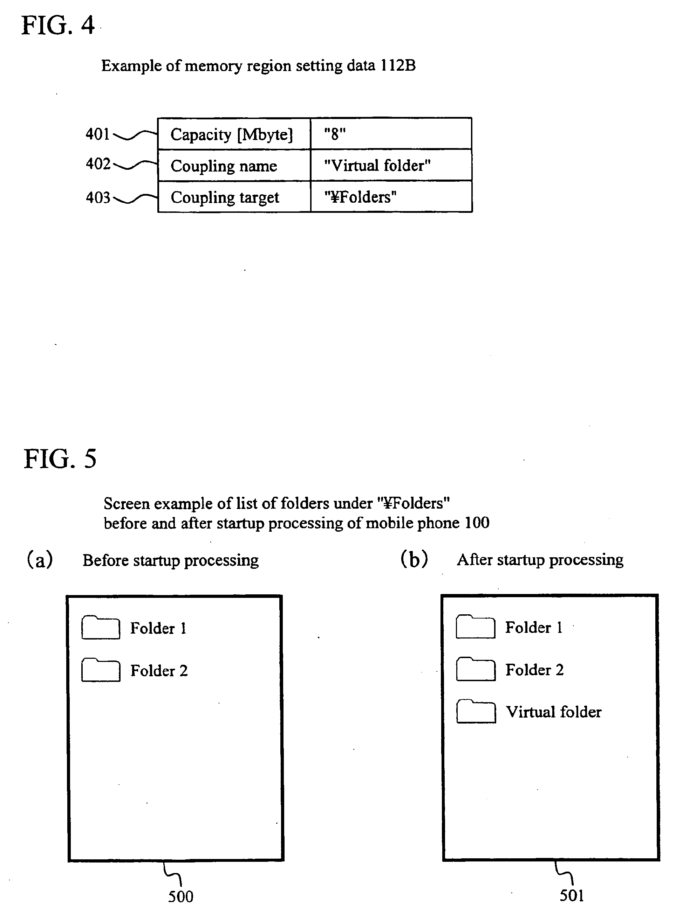

Subsequently, the file management service 112A is started up (step S302). Then, the memory region reserving function 201 of the file management service 112A reads the memory region setting data 112B (see Fig. 4).

Next, it is determined by calculation whether or not a free space in the execution memory 108 is enough (step S303). For example, if it is set that an 8 MB free space is necessary in the memory region setting data 112B, the memory region reserving function 201 determines whether the free space in the execution memory 108 is 8 MB or more.

If the memory region reserving function 201 determines that the free space is not enough, it displays an alert on a display unit (not shown) to prompt a user to modify content of the memory region setting data 112B and terminates the OS (step 304).

If the free space is enough, the memory region reserving function 201 reserves the capacity described in the memory region setting data 112B in the execution memory 108 and creates the volatile storage memory 113 (step S305). The term "volatile" herein means that data does not vanish at the power-off, but the data vanishes at the termination (restart) of the OS. For example, software processing is performed such that a region in the execution memory 108 is flagged, and data stored in the region defined by the flag vanishes at the OS termination.

Then, functions of the memory redirection driver 110A are activated. This allows the volatile storage memory 113 to be coupled to an existing file system so as to access a folder in which a user saves data (see Fig. 5) and the accessed side to be redirected into the volatile storage memory 113 to access the folder (step S306). Meanwhile, the memory access control driver 110B is created to control access to a folder, and the access control actually functions at step S306. That is, a virtual folder is created similarly to a normal folder. The memory access control driver 110B accesses the virtual folder, while the memory redirection driver 110A redirects the access to the virtual folder to the volatile storage memory 113. In this way, apparently access to a virtual folder is executed, but actually, access to another region, i.e., the volatile storage memory 113 is executed.

Subsequently, in Fig. 3 (b), when the mobile phone 100 issues a termination request (OS termination request), the volatile storage memory 113 is released (returns to a normal execution memory) (step S310) and the functions of the memory redirection driver 110A are inactivated. This makes a redirection function inactivated, hence the above mentioned coupling of the volatile storage memory 113 to the existing file system is cancelled (step S311). Afterward, the OS is stopped (step S312).

### (4) Example of Memory Region Setting Data

Fig. 4 is a diagram showing an example of the memory region setting data 112B. As shown in Fig. 4, the memory region setting data 112B includes three items of capacity 401, a coupling name 402 and a coupling target 403. In this example, the capacity 401 is set to 8 MB, the coupling name 402 is set to "virtual folder" and the coupling target is set to "¥Folders".

Accordingly, at step S303 in Fig. 3 (a), it is determined whether or not the execution memory 108 has an 8 MB free space. Additionally, a virtual folder is created under "¥Folders" and the virtual folder is linked (coupled) to the volatile storage memory 113. In this way, apparently confidential data (a file) is stored in the virtual folder, but actually it is stored in the volatile storage memory 113 being the linked side.

### (5) Example of Folder List Screen

Fig. 5 shows diagrams of screen examples of folder lists under "¥Folders" before and after the startup processing of the mobile phone 100. Fig. 5 (a) is a screen example of a folder list under "¥Folders" before the startup processing of the mobile phone 100, in which two folders of a "folder 1" and a "folder 2", which are contained in the list, are displayed. Meanwhile, Fig. 5 (b) is a screen example of a folder list under "¥Folders" after the startup processing of the mobile phone 100, in which a "virtual folder" mounted at step 307 is created and displayed in addition to the "folder 1" and "folder 2".

Although a virtual folder is placed under "¥Folders" in the above way, actually the data is not stored there but the data is stored in the volatile storage memory 113, as described in the above. Then, after the OS termination, the virtual folder is removed from "¥Folders". When the OS is started up again, a new virtual folder is created under "¥Folders".

### (6) Access to Virtual Folder in Mobile Phone

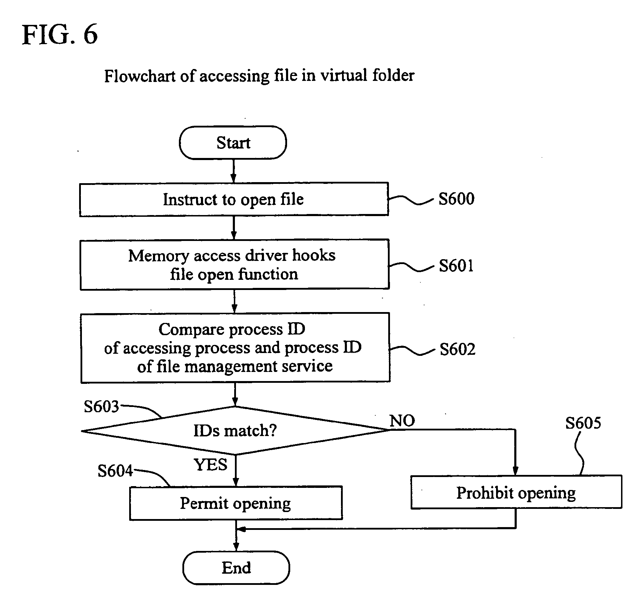

Fig. 6 is a flowchart illustrating control processing for access to a file in a virtual folder using the mobile phone 100. Also unless otherwise noted, the CPU 107 mainly performs processing at each step.

When an application in the mobile phone 100 tries to open the file (step S600), the memory access driver hooks a call of a file open function (step S601). Herein, an application includes a mailer, a viewer or a text editor installed on a normal mobile phone and the file management service 112A.

Subsequently, a process ID of the accessing process and a process ID of the file management service 112A are compared (step S602). If the IDs match each other, the process is permitted to open the file (step S604). If the IDs differ from each other, the process is prohibited from opening the file (step S605). That is, this control does not allow the application 112C in the mobile phone 100, for example, to access the file in a virtual folder, but allows only the file management service 112A to access the file. Accordingly, access to confidential data (a file) is constrained, hence the confidentiality of the file is reserved.

### (7) Access from PC to Virtual Folder in Mobile Phone

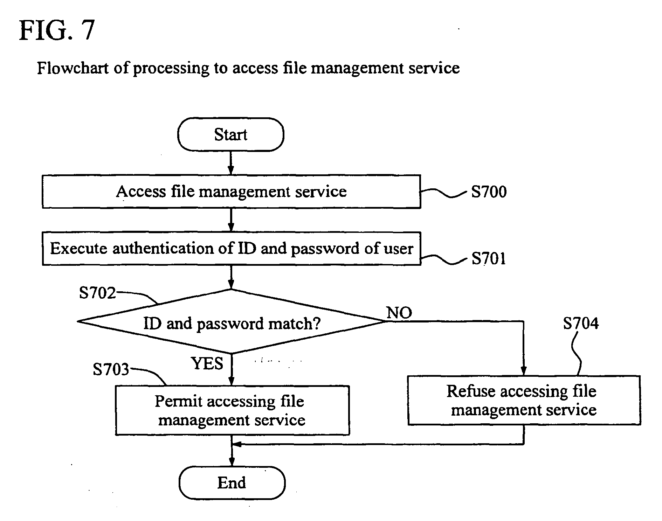

Fig. 7 is a flowchart illustrating the processing when the PC 101 accesses a file in a virtual folder in the mobile phone 100.

First, the file management service 112A detects access from the file transfer application 106A (step S700). In response to the access, the file management service 112A requests an ID and a password from a user via the file transfer application 106A (step S701). When the file management service 112A receives the input of the ID and password, it performs authentication processing (step S702). If the authentication is successful, the file management service 112A permits access to it and executes file transfer processing (step S703). If the authentication fails, the file management service 112A refuses access to it and terminates the processing (step S704).

In the above way, only an authorized user can access confidential data stored in the mobile phone 100.

### (8) Others: Remote Removal Processing on Confidential Data in Mobile Phone

A management server of the mobile phone 100 can also remotely remove confidential data in the mobile phone 100. This processing is to securely manage the confidential data if the PC 101 transferred the confidential data to the mobile phone 100 and afterward the mobile phone 100 is lost or stolen, for example.

To remove confidential data in the mobile phone 100, for example, first, a system administrator operates his/her own PC to access a management page of the mobile phone management server (not shown). Then, content of the management page is displayed on a screen of the administrator's terminal. Next, the system administrator pushes a remote removal button on a registered mobile phone list to direct removal of confidential data stored in the mobile phone 100 in concern.

When the mobile phone management server receives the removal direction, it transmits the remote removal instruction to the file management service 112A in the mobile phone 100 through a telephone line network for the mobile phone. When the file management service 112A receives the instruction, it removes all the confidential data in the mobile phone 100. Then, the removed file list and removal completion date and time is notified to the mobile phone management server. Meanwhile, the management page is updated based on the remote removal completion notification.

As described in the above, the remote removal is basically performed via a telephone line network if a mobile phone is lost. However, the removal can be performed in combination with an option of periodic deletion in case of the loss of the phone out of the service area. According to a policy of the periodic deletion, the deletion can be performed at a fixed time everyday, or after a certain time period after file copy. This can realize greater security.

### <Second Embodiment>

### (1) System Configuration

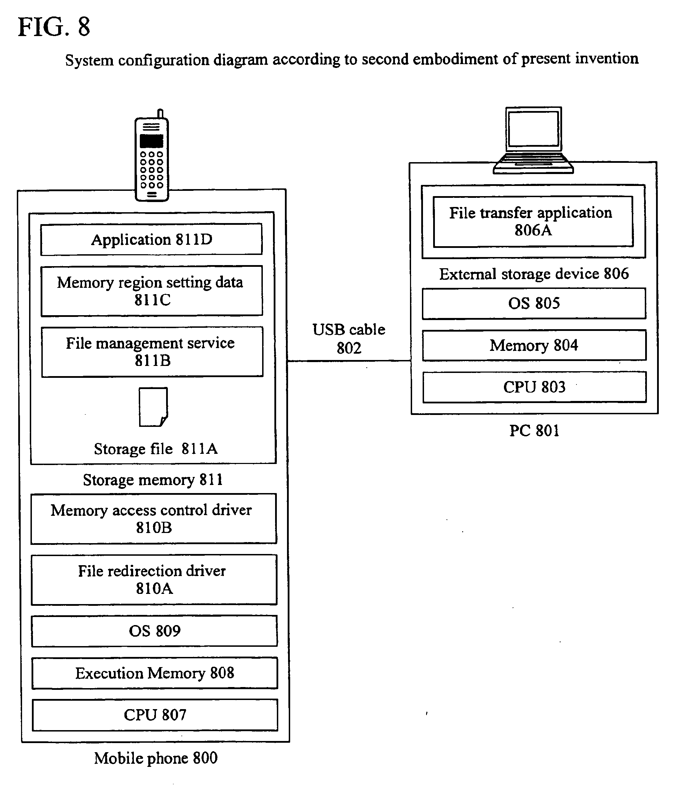

Fig. 8 is a diagram showing the overall configuration of a data holding system according to a second embodiment of the present invention. This data holding system comprises a mobile phone 800 and a PC 801, similarly to the first embodiment. The mobile phone 800 and the PC 801 are connected to each other via a USB cable 802 for serial communication.

The PC 801 comprises a CPU 803, a memory 804, an OS 805 and an external storage device 806 that retains a file transfer application 806A.

Meanwhile, the mobile phone 100 comprises a CPU 807, an execution memory 808, an OS 809, a file redirection driver 810A, a memory access control driver 810B and a storage memory 811 that saves a storage file 811 A, a file management service 811 B, memory region setting data 811C and an application 811D.

The storage file 811 A is a region to store confidential data (a file). Once the storage file 811 A is created, it does not vanish even after the OS is terminated, differently from the volatile storage memory 113 in the first embodiment.

The memory access control driver 810B monitors I/O to/from the storage file 811A and prohibits a process other than the file management service 811B from accessing confidential data. That is, only the file management service 811 B can handle the confidential data.

The file redirection driver 810A apparently holds confidential data in a virtual folder being discussed later, but actually operates to hold the data in another record region being a linked side (the storage file 811 A).

### (2) Startup Processing and Termination Processing of Mobile Phone

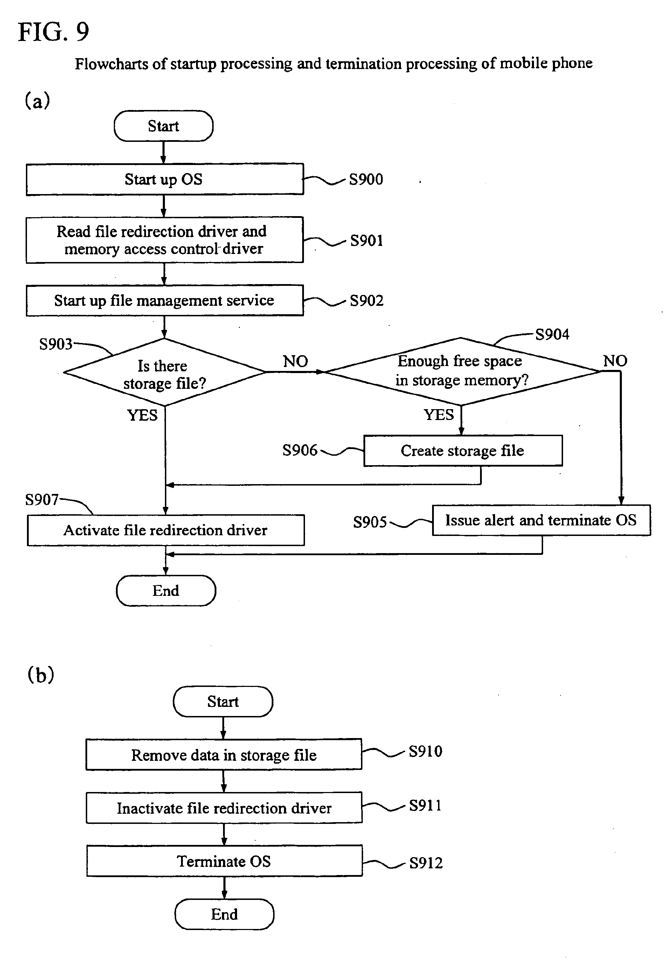

Fig. 9 (a) is a flowchart illustrating the processing executed at the startup of the mobile phone 800; and Fig. 9 (b) is a flowchart illustrating the processing executed at the termination of the mobile phone 100. In either processing, the CPU 107 mainly operates the processing, unless otherwise noted.

First, the OS starts up (step S900). Then, the OS reads the file redirection driver 810A and the memory access control driver 810B and deploys the drivers on the execution memory 808 (step S901). At this time, the file redirection driver 810A and the memory access control driver 810B are read in the state of not being activated (inactivated).

The file management service 811B is started up (step S902), and it is checked whether or not the storage file 811A is in the storage memory 811 (step S903).

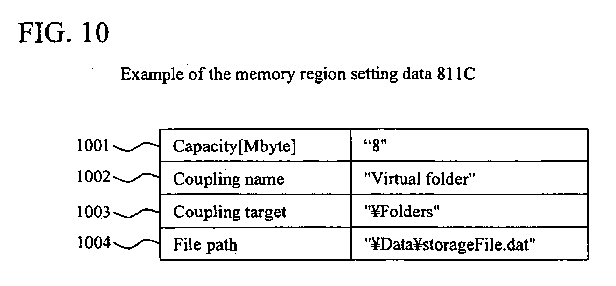

If the storage file 811 A is not there (this condition is satisfied when the mobile phone 800 is started up for the first time, since once a storage file is created, it is not removed even after the OS is terminated), then the memory region reserving function (see Fig. 2) of the file management service 811 B reads the memory region setting data 811C (see Fig. 10). Then, it is determined whether or not a free space in the storage memory 811 is enough (step S904). For example, if it is set that an 8 MB free space is necessary in the memory region setting data 811C, the memory region reserving function determines whether the free space in the storage memory 811 is 8 MB or more.

If the memory region reserving function determines that the free space in the storage memory 811 is not enough, it displays an alert on a display unit (not shown) to prompt a user to modify content of the memory region setting data 811C and terminates the OS (step S905).

If the memory region reserving function determines that the memory 811 has a enough free space, then it reserves the capacity indicated in the memory region setting data 811C in the storage memory 811 and creates the storage file 811A (step S906).

Then, functions of the file redirection driver 810A are activated. This allows the storage file 811A to be coupled to an existing file system so as to access a folder in which a user saves data and the accessed side to be redirected to the storage file 811 A to access the folder (virtual folder) (step S907).

Meanwhile, the memory access control driver 810B is created to control access to a folder, and the access control actually functions at step S907.

In the second embodiment, since the storage file 811A is mounted in the storage memory 811 exclusively (such that a process other than the file management service 811B cannot access it), the file management service 811 B exclusively opens the storage file 811 A so that other processes are prohibited from accessing the storage file 811A. As such, information written in the storage file 811A can be prevented from being wrongly flown out.

In the first embodiment, the execution memory 108 is used to save data. The storage memory 811, which is generally larger than the memory 108 in capacity, can hold more data.

In Fig. 9 (b), if mobile phone termination is requested, the storage file 811A is released (step S910) and the file redirection driver 810A is inactivated (step S911). Afterward, the OS stops (step S912). As described in the above, due to the OS termination, the storage file 811A is not removed from the storage memory 811 while data stored in the storage file 811A is removed.

### (3) Example of Memory Region Setting Data

Fig. 10 is a diagram showing an example of the memory region setting data 811C. As shown in the drawing, the memory region setting data 811C includes four items of capacity 1001, a coupling name 1002, a coupling target 1003 and a file path 1004. In this example, the capacity 1001 is set to 8 MB, the coupling name 1002 is set to "virtual folder ", the coupling target 1003 is set to "¥Folders", and the file path 1004 is set to "¥Data¥storageFile.dat".

As the above, a coupling name is set to a virtual folder, a folder is created under "¥Folders" as in Fig. 5, which is accessed apparently. As described in the above, data is not stored there actually, but is redirected to and stored in the storage file 811A created in the storage memory 811.

A functional configuration diagram of the file management service 811B is same as Fig. 2. A screen example of a folder list before and after the startup processing of the mobile phone 800 is same as Fig. 5. The processing to access a file in the virtual folder is same as Fig. 6. The processing to access the file management service 811B is same as Fig. 7.

A previously registered mobile phone can be allowed to access the application 806A by performing authentication using a terminal number specific to the mobile phone 800 such as a mobile phone number immediately before the PC 801 accesses the file management service 811B in the mobile phone 800 using the file transfer application 806A, so that the data can be prevented from being taken out to an unexpected mobile phone.

Further, confidential data can be removed through the remote operation, as described in relation to the first embodiment.

### <Conclusion>

According to the embodiment, a pre-determined capacity of volatile memory region (a region that is deleted at the OS termination) is reserved in a memory (the execution memory) in the mobile phone, and linked to a virtual folder created in a folder creating region. Then, when the virtual folder is accessed, the access is redirected to the volatile memory region. This allows for a user to handle a confidential file as if the file is stored in a normal folder. Additionally, a company other than a mobile phone vendor can hold data that can be implemented based on an existing OS image.

Also according to this embodiment, access from a general application such as a mailer, a viewer or an editor to the volatile memory region is prohibited, while only a file management service (application) is permitted to access the volatile memory region. This prohibit the display unit of the mobile phone from displaying confidential data and the data from being transferred to another PC by attaching the data to an e-mail, so that the confidentiality of the confidential data can be kept even if the mobile phone holds a confidential file.

Further, the file management service deletes the volatile memory region from the execution memory and deletes the virtual folder at the OS termination in the mobile phone.

According to this embodiment, the mobile phone reserves part of the non-volatile memory as a non-volatile file region (storage file) being a memory region that survives after the OS termination, and couples a folder to save a confidential file transferred from the PC to the non-volatile file region at the OS startup. During the OS startup, the mobile phone also redirects access to the folder to the storage file. Then, the confidential file stored in the storage file is exclusively opened only by the file management service.

With above configuration, for example, flow-out of the confidential data transferred from the PC to the mobile phone due to wrong operation of the mobile phone by an authorized user of the mobile phone can be prevented. Additionally, it can prevent a malicious authorized user from taking out data from the mobile phone and an unauthorized user who has obtained the mobile phone in case of loss of the mobile phone from taking out the data. In this way, confidential data can be securely managed. Further, confidential data can be transferred from the PC to the mobile phone for secure holding and the confidential data can be used on another PC, so that very convenient use environment can be provided to a user.

The functions of this embodiment can be implemented in a software program code. In that case, a storage medium for recording the program code is provided to a system or device, and a computer (or CPU, MPU) of the system or device reads out the program code stored in the storage medium. In that case, the program code itself read out from the storage medium implements the functions of the above-mentioned embodiment, and the program code itself and the storage medium for storing the code are components of the present invention. A storage medium to supply such a program code includes a floppy (R) disc, CD-ROM, DVD-ROM, hard disk, optical disc, optical-magnetic disc, CD-R, magnetic tape, non-volatile memory card, or ROM, for example.

Based on a direction in the program code, the OS (operating system) running on a computer can perform part or all of actual processing, and the functions of the above-mentioned embodiment can be implemented through the processing.

Further, the program code read out from the storage medium can be written in a memory on the computer, then based on a direction in the program code, the CPU of the computer can perform part or all of the actual processing, and the functions of the above-mentioned embodiment can be implemented through the processing.

Furthermore, the software program code to implement the functions of the embodiment can be delivered via a network and stored in storage means such as the hard disk or memory of the system or device or in a storage medium such as a CD-RW or CD-R. Then, the computer (or CPU, MPU) of the system or device can read out and execute the program code stored in the storage means or the storage medium to achieve the functions.

## Claims

1. A mobile terminal device (100) for transmitting and receiving a confidential file to/from a user terminal device (101), comprising:
file management means (112A) for, at the startup of an OS (109), reserving part of an execution memory (108) in the device (100) as a volatile memory region (113) being a memory region that is deleted at the termination of said OS (109), and coupling a virtual folder to save the confidential file transferred from said user terminal device (101) to said volatile memory region (113); redirection means (110A) for redirecting access to said virtual folder to said volatile memory region (113) during said OS startup, and memory access controlling means (110B) for permitting access to said confidential file in response to a request to access said volatile memory region (113) only if an accessing side is said file management means (112A).

2. The mobile terminal device according to claim 1, wherein said file management means (112A) deletes said volatile memory region (113) from said execution memory (108) at said OS termination.

3. A mobile terminal device (800) for transmitting and receiving a confidential file to/from a user terminal device (801) , comprising:
file management means (811B) for, at the startup of an OS (809), reserving part of the non-volatile memory as a non-volatile file region being a memory region that survives after the termination of said OS, and coupling a folder to save the confidential file transferred from said user terminal device (801) to said non-volatile file region;
redirection means (810A) for redirecting access to said folder to said non-volatile file region during said OS startup,
wherein said file management means (811 B) deletes only said confidential file stored in said non-volatile file region at said OS termination, said mobile terminal device (800) further comprising memory access controlling means (810B) for permitting access to said confidential file only if an accessing side is said file management means (811B).

4. A file management system comprising a user terminal device (101) and a mobile terminal device (100) as claimed in one of claims 1 to 2, and for transferring a confidential file between the devices, wherein
said user terminal device (101) comprises:
file transfer controlling means for requesting access to said mobile terminal device (100) and executing transfer of the confidential file.

5. A file management system comprising a user terminal device (801) and a mobile terminal device (800) as claimed in claim 3, and for transferring a confidential file between the devices, wherein
said user terminal device (801) comprises:
file transfer controlling means for requesting access to said mobile terminal device (800) and executing transfer of the confidential file.

6. A file management method of managing transfer of a confidential file in a system comprising a user terminal device (101) and a mobile terminal device (100), wherein
in said user terminal device (101):
file transfer controlling means requests access to said mobile terminal device (100) and executes transfer of the confidential file, and
in said mobile terminal device (100):
file management means (112A), at the startup of an OS (109) in the mobile terminal device (100), reserves part of an execution memory (108) in the device (100) as a volatile memory region (113) being a memory region that is deleted at the termination of said OS (109), and couples a virtual folder to save the confidential file transferred from said user terminal device to said volatile memory region; and
redirection means (110A) redirects access to said virtual folder to said volatile memory region (113) during the OS startup in said mobile terminal device (100), wherein memory access controlling means (110B) permit access to said confidential file in response to a request to access said volatile memory region (113) only if an accessing side is said file management means (112A).

7. A file management method of managing transfer of a confidential file in a system comprising a user terminal device (801) and a mobile terminal device (800), wherein
in said user terminal device (801):
file transfer controlling means requests access to said mobile terminal device (800) and executing transfer of the confidential file, and
in said mobile terminal device (800):
file management means (811B), at the startup of an OS (809) in the mobile terminal device, reserves part of the non-volatile memory as a non-volatile file region being a memory region that survives after the termination of said OS, and couples a folder to save the confidential file transferred from said user terminal device (801) to said non-volatile file region; and
redirection means (810A) redirects access to said folder during the OS startup in said mobile terminal device to said non-volatile file region, wherein said file management means (811B) deletes only said confidential file stored in said non-volatile region at OS termination, and
wherein memory access controlling means (810B) permit access to said confidential file only if an accessing side is said file management means (811 B).

## Patentansprüche

1. Mobiles Endgerät (100) zum Übermitteln und zum Empfangen einer vertraulichen Datei an ein/von einem Nutzerendgerät (101), wobei das mobile Endgerät (100) folgendes umfasst:
Dateien-Verwaltungsmittel (112A) um beim Startvorgang eines Betriebssystems (109) einen Teil eines Ausführungsspeichers (108) in dem Gerät (100) als eine flüchtige Speicherregion (113) freizuhalten, wobei die flüchtige Speicherregion eine Speicherregion ist, die bei Beendigung des Betriebssystems (109) gelöscht wird, und um einen virtuellen Ordner anzubinden, um die vertrauliche Datei zu speichern, die vom Nutzerendgerät (101) an die flüchtige Speicherregion (113) übertragen wurde;
Zuweisungsmittel (110A) um während des Startvorgangs des Betriebssystems der flüchtigen Speicherregion (113) den Zugriff auf den virtuellen Ordner zuzuweisen, und
Speicherzugriffskontrollmittel (110B), um den Zugriff auf die vertrauliche Datei in Antwort auf eine Anforderung auf die flüchtige Speicherregion (113) zuzugreifen nur dann zuzulassen, wenn die zugreifende Seite die Dateien-Verwaltungsmittel (112A) sind.

2. Mobiles Endgerät nach Anspruch 1, bei dem die Dateien-Verwaltungsmittel (112A) die flüchtige Speicherregion (113) bei Beendigung des Betriebssystems von dem Ausführungsspeicher (108) löschen.

3. Mobiles Endgerät (800) zum Übermitteln und zum Empfangen einer vertraulichen Datei an ein/von einem Nutzerendgerät (801), wobei das mobile Endgerät (800) folgendes umfasst:
Dateien-Verwaltungsmittel (811B), um beim Startvorgang des Betriebssystems (809) einen Teil des nichtflüchtigen Speichers als nichtflüchtige Dateien-Region freizuhalten, die eine Speicherregion ist, die nach Beendigung des Betriebssystems weiterbesteht, und um einen Ordner anzubinden, um die vertrauliche Datei zu speichern, die von dem Nutzerendgerät (801) an die nichtflüchtige Dateien-Region übertragen wurde;
Zuweisungsmittel (810A), um den Zugriff auf den Ordner während des Startvorgangs des Betriebssystems der nichtflüchtigen Dateien-Region zuzuweisen, wobei die Dateien-Verwaltungsmittel (811B) bei Beendigung des Betriebssystems nur die in der nichtflüchtigen Dateien-Region gespeicherte vertrauliche Datei löschen, und
Speicherzugriffskontrollmittel (810B), um den Zugriff auf die vertrauliche Datei nur dann zuzulassen, wenn die zugreifende Seite die Dateien-Verwaltungsmittel (811B) sind.

4. System zur Dateienverwaltung, das ein Nutzerendgerät (101) und ein mobiles Endgerät (100) nach Anspruch 1 oder 2 umfasst und das dazu eingerichtet ist, eine vertrauliche Datei zwischen den Geräten zu übertragen, wobei
das Nutzerendgerät (101) Dateienübertragungs-Kontrollmittel umfasst, um den Zugriff auf das mobile Endgerät (100) anzufordern und um die Übertragung der vertraulichen Datei auszuführen.

5. System zur Dateienverwaltung, das ein Nutzerendgerät (801) und ein mobiles Endgerät (800) nach Anspruch 3 umfasst, und das dazu eingerichtet ist, eine vertrauliche Datei zwischen den Geräten zu übertragen, wobei
das Nutzerendgerät (801) Dateienübertragungs-Kontrollmittel umfasst, um den Zugriff auf das mobile Endgerät (800) anzufordern und um die Übertragung der vertraulichen Datei auszuführen.

6. Verfahren zur Dateienverwaltung, das die Übertragung einer vertraulichen Datei in einem System organisiert, das ein Nutzerendgerät (101) und ein mobiles Endgerät (100) umfasst, wobei
in dem Nutzerendgerät (101):
Dateienübertragungs-Kontrollmittel Zugriff auf das mobile Endgerät (100) anfordern und die Übertragung der vertraulichen Datei ausführen, und wobei
in dem mobilen Endgerät (100):
Dateien-Verwaltungsmittel (112A), während das Betriebssystems (109) in dem mobilen Endgerät (100) startet, einen Teil eines Ausführungsspeichers (108) in dem Gerät (100) als flüchtige Speicherregion (113) freihalten, die eine Speicherregion ist, die bei Beendigung des Betriebssystems (109) gelöscht wird, und einen virtuellen Ordner anbinden, um die vertrauliche Datei zu speichern, die von dem Nutzerendgerät an die flüchtige Speicherregion übertragen wurde; und wobei
Zuweisungsmittel (110A) während des Startvorgangs des Betriebssystems in dem mobilen Endgerät (100) den Zugriff auf den virtuellen Ordner der flüchtigen Speicherregion (113) zuweisen, wobei Speicherzugriffskontrollmittel (110B) den Zugriff auf die vertrauliche Datei in Antwort auf eine Anforderung auf die flüchtige Speicherregion (113) zuzugreifen nur dann zulassen, wenn die zugreifende Seite die Dateien-Verwaltungsmittel (112A) sind.

7. Verfahren zur Dateienverwaltung, das die Übertragung einer vertraulichen Datei in einem System organisiert, das ein Nutzerendgerät (801) und ein mobiles Endgerät (800) umfasst, wobei
in dem Nutzerendgerät (801):
Dateienübertragungs-Kontrollmittel den Zugriff auf das mobile Endgerät (800) anfordern und die Übertragung der vertraulichen Datei ausführen, und wobei
in dem mobilen Endgerät (800):
Dateien-Verwaltungsmittel (811B), während das Betriebssystems (809) in dem mobilen Endgerät startet, einen Teil des nichtflüchtigen Speichers als nichtflüchtige Dateien-Region freihalten, die eine Speicherregion ist, die nach Beendigung des Betriebssystems weiterbesteht, und einen Ordner anbinden, um die vertrauliche Datei zu speichern, die von dem Nutzerendgerät (801) an die nichtflüchtige Dateien-Region übertragen wurde; und wobei
Zuweisungsmittel (810A) den Zugriff auf den Ordner während des Startvorgangs des Betriebssystems in dem mobilen Endgerät der nichtflüchtigen Dateien-Region zuweisen, wobei die Dateien-Verwaltungsmittel (811B) bei Beendigung des Betriebssystems nur diejenige vertrauliche Datei löschen, die in der nichtflüchtigen Region gespeichert ist, und wobei
Speicherzugriffskontrollmittel (810B) den Zugriff auf die vertrauliche Datei nur dann zulassen, wenn die zugreifende Seite die Dateien-Verwaltungsmittel (811B) sind.

## Revendications

1. Dispositif terminal mobile (100) pour émettre et recevoir un fichier confidentiel en direction et à partir d'un dispositif terminal d'utilisateur (101), comprenant :
des moyens de gestion de fichier (112A) pour, au démarrage d'un système d'exploitation, OS, (109), réserver une partie d'une mémoire d'exécution (108) dans le dispositif (100) en tant que région de mémoire volatile (113) constituant une région de mémoire qui est supprimée à l'arrêt de l'OS (109), et coupler un dossier virtuel pour sauvegarder le fichier confidentiel transféré à partir du dispositif terminal d'utilisateur (101) vers la région de mémoire volatile (113) ; des moyens de redirection (110A) pour rediriger l'accès au dossier virtuel vers la région de mémoire volatile (113) pendant le démarrage de l'OS, et des moyens de commande d'accès en mémoire (110B) pour permettre l'accès au fichier confidentiel en réponse à une requête d'accès de la région de mémoire volatile (113) seulement si l'accès provient des moyens de gestion de fichier (112A).

2. Dispositif terminal mobile selon la revendication 1, dans lequel les moyens de gestion de fichier (112A) suppriment la région de mémoire volatile (113) de la mémoire d'exécution (108) à l'arrêt de l'OS.

3. Dispositif terminal mobile (800) pour émettre et recevoir un fichier confidentiel en direction et à partir d'un dispositif terminal d'utilisateur (801), comprenant :
des moyens de gestion de fichier (811B) pour, au démarrage d'un système d'exploitation, OS, (809), réserver une partie de la mémoire non volatile en tant que région de fichier non volatile constituant une région de mémoire qui survit après l'arrêt de l'OS, et coupler un dossier pour sauvegarder le fichier confidentiel transféré à partir du dispositif terminal d'utilisateur (801) vers la région de fichier non volatile ;
des moyens de redirection (810A) pour rediriger l'accès au dossier vers la région de fichier non volatile pendant le démarrage de l'OS;
dans lequel les moyens de gestion de fichier (811B) suppriment seulement le fichier confidentiel stocké dans la région de fichier non volatile à l'arrêt de l'OS, le dispositif terminal mobile (800) comprenant en outre des moyens de commande d'accès en mémoire (810B) pour permettre un accès au fichier confidentiel seulement si l'accès provient des moyens de gestion de fichier (811B).

4. Système de gestion de fichier comprenant un dispositif terminal d'utilisateur (101) et un dispositif terminal mobile (100) selon l'une des revendications 1 ou 2, et pour transférer un fichier confidentiel entre les dispositifs, dans lequel ;
le dispositif terminal d'utilisateur (101) comprend des moyens de commande de transfert de fichier pour requérir un accès au dispositif terminal mobile (100) et exécuter un transfert du fichier confidentiel.

5. Système de gestion de fichier comprenant un dispositif terminal d'utilisateur (801) et un dispositif terminal mobile (800) selon la revendication 3, et pour transférer un fichier confidentiel entre les dispositifs, dans lequel ;
le dispositif terminal d'utilisateur (801) comprend des moyens de commande de transfert de fichier pour requérir un accès au dispositif terminal mobile (800) et exécuter un transfert du fichier confidentiel.

6. Procédé de gestion de fichier pour gérer le transfert d'un fichier confidentiel dans un système comprenant un dispositif terminal d'utilisateur (101) et un dispositif terminal mobile (100), dans lequel :
dans le dispositif terminal d'utilisateur (101):
des moyens de commande de transfert de fichier requièrent l'accès au dispositif terminal mobile (100) et exécutent le transfert du fichier confidentiel, et
dans le dispositif terminal mobile (100) :
des moyens de gestion de fichier (112A), au démarrage d'un OS (109) dans le dispositif terminal mobile (100), réservent une partie de la mémoire de l'exécution (108) dans le dispositif (100) en tant que région de mémoire volatile (113) constituant une région de mémoire qui est supprimée à l'arrêt de l'OS (109) et couplent un fichier virtuel pour sauvegarder le fichier confidentiel transféré à partir du dispositif terminal d'utilisateur vers la région de mémoire volatile ; et
des moyens de redirection (110A) redirigent l'accès au dossier virtuel vers la région de mémoire volatile (113) pendant le démarrage de l'OS dans le dispositif terminal mobile (100), dans lequel :
des moyens de commande d'accès en mémoire (110B) permettent l'accès au fichier confidentiel en réponse à une requête d'accès à la région de mémoire volatile (113) seulement si l'accès provient des moyens de gestion de fichier (112A).

7. Procédé de gestion de fichier pour gérer le transfert d'un fichier confidentiel dans un système comprenant un dispositif terminal d'utilisateur (801) et un dispositif terminal mobile (800), dans lequel :
dans le dispositif terminal d'utilisateur (801) :
des moyens de commande de transfert de fichier requièrent l'accès au dispositif terminal mobile (800) et exécutent le transfert du fichier confidentiel, et
dans le dispositif terminal mobile (800) :
des moyens de gestion de fichier (811B), au démarrage d'un OS (809) dans le dispositif terminal mobile, réservent une partie de la mémoire non volatile en tant que région de fichier non volatile constituant une région de mémoire qui survit après l'arrêt de l'OS, et couplent un dossier pour sauvegarder le fichier confidentiel transféré à partir du dispositif terminal d'utilisateur (801) vers la région de fichier non volatile ; et
des moyens de redirection (810A) redirigent l'accès au dossier pendant le démarrage de l'OS dans le dispositif terminal mobile vers la région de fichier non volatile, dans lequel les moyens de gestion de fichier (811B) suppriment seulement le fichier confidentiel mémorisé dans la région non volatile à l'arrêt de l'OS, et
dans lequel les moyens de commande d'accès en mémoire (810B) permettent un accès au fichier confidentiel seulement si l'accès provient des moyens de gestion de fichier (811B).
